(19) Europäisches Patentamt
European Patent Office
Office européen des brevets

(11) **EP 3 913 218 B1**

(12) **EUROPÄISCHE PATENTSCHRIFT**

(45) Veröffentlichungstag und Bekanntmachung des Hinweises auf die Patenterteilung:
**20.12.2023  Patentblatt 2023/51**

(21) Anmeldenummer: **21174183.0**

(22) Anmeldetag: **17.05.2021**

(51) Internationale Patentklassifikation (IPC):
**F03D 9/28** *(2016.01)*    **F03D 15/00** *(2016.01)*

(52) Gemeinsame Patentklassifikation (CPC):
**F03D 9/28; F03D 15/00;** F05B 2220/704;
Y02E 10/72

(54) **WINDENERGIEANLAGE UND VERFAHREN ZUM ÜBERTRAGEN VON ENERGIE VON EINEM ROTOR AUF EINEN GENERATOR EINER WINDENERGIEANLAGE**

WIND TURBINE AND METHOD FOR TRANSFERRING ENERGY FROM A ROTOR TO A GENERATOR OF A WIND TURBINE

ÉOLIENNE ET PROCÉDÉ DE TRANSMISSION DE L'ÉNERGIE D'UN ROTOR À UN GÉNÉRATEUR D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2020   DE 102020113436**

(43) Veröffentlichungstag der Anmeldung:
**24.11.2021   Patentblatt 2021/47**

(73) Patentinhaber: **Weidmann, Kurt-Ulrich**
**33615 Bielefeld (DE)**

(72) Erfinder: **Weidmann, Kurt-Ulrich**
**33615 Bielefeld (DE)**

(74) Vertreter: **Kleine, Hubertus et al**
**Loesenbeck - Specht - Dantz**
**Patent- und Rechtsanwälte**
**Am Zwinger 2**
**33602 Bielefeld (DE)**

(56) Entgegenhaltungen:
**EP-A2- 2 952 736        EP-B1- 3 011 203**
**GB-A- 2 506 652         US-A1- 2013 009 408**
**US-A1- 2013 032 211**

**Beschreibung**

Die Erfindung betrifft eine Windenergieanlage mit einem Rotor und einem bodennah angeordneten Generator, wobei ein Kompressor mechanisch mit dem Rotor und ein Druckgasmotor mechanisch mit dem Generator gekoppelt ist und wobei ein Gasauslass des Kompressors und ein Gaseinlass des Druckgasmotors über eine Druckgasleitung miteinander verbunden sind.

Die Erfindung betrifft weiterhin ein Verfahren zur Übertragung von mechanischer Energie in einer Windenergieanlage von einem Rotor auf einen bodennah angeordneten Generator mittels eines mechanisch mit dem Rotor gekoppelten Kompressors, einer Druckgasleitung und eines mechanisch mit dem Generator gekoppelten Druckgasmotors. Bei dem Verfahren wird Arbeitsgas im Kompressor unter Energieaufnahme von einem ersten Druck auf einen zweiten Druck komprimiert, über die Druckgasleitung zum Druckgasmotor geführt und unter Energieabgabe im Druckgasmotor wieder auf den ersten Druck entspannt.

Windenergieanlagen weisen in der Regel eine horizontale Rotorachse auf, die nach heutigem Stand der Technik direkt oder über ein Getriebe einen Stromgenerator antreibt. Diesem Prinzip folgend wird der Stromgenerator, im Rahmen dieser Anmeldung als Generator bezeichnet, bzw. das ggf. vorgelagerte Getriebe in einem drehbar gelagerten Maschinenhaus auf der Spitze eines Turms der Windenergieanlage angeordnet. Dieses Maschinenhaus wird im Folgenden Gondel genannt. Die Energie wird sodann elektrisch entlang des Turmes zum Turmfuß übertragen. Bei Verwendung langsam laufender Generatoren entfällt der Einsatz eines Getriebes und der Generator wird direkt von der Rotorachse mit dessen Drehzahl angetrieben. Bei schnell laufenden Generatoren wird von der Rotordrehzahl mittels eines zwischengeschalteten mechanischen Getriebes auf die höhere Generatordrehzahl übersetzt.

Die technologische Entwicklung hin zu immer leistungsstärkeren Windenergieanlagen mit immer höheren Türmen führt dazu, dass die Reduktion von Größe und Gewicht der Gondel zunehmend bedeutender wird. Ein grundlegender Ansatz für die Reduktion von Gewicht und Volumen der Gondel ist die Verlegung des voluminösen und schwergewichtigen Generators und ggf. einer vorgelagerten Getriebestufe aus dieser Gondel heraus in einen bodennahen Bereich, beispielsweise in den Turmfuß. Damit kann die an der Rotorachse abnehmbaren Energie jedoch nicht mehr elektrisch aus der Gondel heraus übertragen werden.

Aus der Druckschrift DE 10 2011 106 145 B3 ist eine Windenergieanlage mit horizontaler Rotorachse bekannt, deren Drehbewegung über ein Schubkurbelgetriebe in eine linear oszillierende Bewegung umgesetzt wird. Die linear oszillierende Bewegung wird über Zugseile oder Zugstangen von einem Turmkopf der Windenergieanlage zu einem bodennah angeordneten Generator übertragen. Eine derartige oder vergleichbare mechanische Energieübertragung in den bodennahen Bereich mittels Zugelementen, Wellen, Zahnriemen oder -ketten etc. ist aufgrund der großen Turmhöhen und der hohen Leistungswerte aktueller Windenergieanlagen mit großen zu beschleunigenden Massen verbunden und damit nicht praktikabel.

Die Druckschriften DE 3 025 563 A1, DE 10 2007 061 517 A1 und US 2012/0045328 A1 beschreiben jeweils eine Energieübertragung von der Gondel zu einem oder mehreren bodennahen Generator(en) mittels eines hydraulischen Systems. Hydraulische Systeme weisen wegen der hohen Viskosität des Fluids eine entsprechend starke innerer Reibung auf. Dies führt zu unzureichenden Wirkungsgraden solcher Systeme.

Als weitere Alternative zu einer elektrischen Übertragung sind pneumatische Übertragungen bekannt, beispielsweise aus den Druckschriften US 2 112 633 A, DE 103 34 637 A1, DE 20 2018 102 987 U1 und EP 1 607 625 A2. Es wird dabei jeweils generatornah mittels eines Kompressors Luft als Arbeitsgas mithilfe der Windenergie komprimiert und als Druckluft zu einem bodennah angeordneten Druckgasmotor geführt. Der sich dort entspannenden Druckluft wird Energie zum Antreiben eines Generators entnommen und die entspannte Luft in die Umgebung abgegeben. Neben dem Vorteil der Energieübertragung zu dem boden- und generatornah angeordneten Druckgasmotor ergibt sich vorteilhaft eine leichte Speicherfähigkeit der Druckluft in einem Drucktank, wobei gemäß der Druckschrift DE 20 2018 102 987 U1 der Turm der Windkraftanlage selbst als Drucktank ausgebildet sein kann. Durch den Drucktank können Windstärkenschwankungen oder Verbrauchsschwankungen in einem gewissen Maße ausgeglichen werden.

Nachteilig an der bislang bekannten Energieübertragung der mechanischen Energie des Rotors von der Gondel in einen bodennahen Bereich über ein pneumatisches System ist ein geringer Wirkungsgrad. Dieser resultiert zum Beispiel aus thermischen Verlusten, verursacht durch einen hohen Temperaturanstieg bei der adiabatischen Kompression. Diese Verluste können durch thermische Isolierung des Systems teilweise vermindert werden, wie z.B. in der Schrift EP 1 607 625 A2 beschrieben ist. Es bleibt jedoch das Problem sehr hoher Volumenströme auf der Eingangsseite des Kompressors sowie sehr hoher Temperaturen des Gases nach der Kompression, deren Beherrschung hohe technische Ansprüche stellt.

Als weitere Alternative zu einer elektrischen Übertragung ist eine andere pneumatische Übertragung bekannt, beispielsweise aus der Druckschrift EP 3 011 203 B1.

Es ist daher eine Aufgabe der vorliegenden Erfindung, eine Windenergieanlage der eingangs genannten Art und ein Verfahren zum Betreiben einer solchen Windenergieanlage zu schaffen, mit denen Energie pneumatisch von einem Rotor auf einen bodennah positionierten Generator effektiv mit verbessertem Wirkungsgrad übertragen werden kann.

Diese Aufgabe wird durch eine Windenergieanlage und ein Verfahren mit den Merkmalen der jeweiligen unabhängigen Ansprüche gelöst. Vorteilhafte Ausgestaltungen und Weiterbildungen sind Gegenstand der abhängigen Ansprüche. Eine erfindungsgemäße Windenergieanlage der eingangs genannten Art zeichnet sich durch eine Rückführdruckgasleitung aus, über die ein Gaseinlass des Kompressors mit einem Gasauslass des Druckgasmotors verbunden ist, wobei die Windenergieanlage so ausgebildet und eingerichtet ist, dass das Arbeitsgas im Betrieb in der Rückführdruckgasleitung unter einem Druck steht, der mindestens 5 bar beträgt. Erfindungsgemäß ist die Windenergieanlage weiter dazu eingerichtet, eine übertragene Leistung bei einem vorgegebenem Wert für ein Kompressionsverhältnis des Arbeitsgases im Kompressor über einen Wert für einen Eingangsdruck des Arbeitsgases bei einem Eintritt in den Kompressor zu steuern.

Ein erfindungsgemäßes Energieübertragungsverfahren, das von einer derartigen Windenergieanlage ausgeführt werden kann, weist entsprechend als zusätzlichen Schritt auf, dass das entspannte Arbeitsgas über die Rückführdruckgasleitung vom Druckgasmotor zum Kompressor zurückgeführt wird, um wieder komprimiert zu werden, wobei das Arbeitsgas in der Rückführdruckgasleitung mit mindestens 5 bar unter einem Druck steht, der signifikant größer ist als der Umgebungsluftdruck.

Die Rückführdruckgasleitung ermöglicht es, das Arbeitsgas, nachfolgend auch abkürzend als Gas bezeichnet, in einem geschlossenen Kreislauf zu führen, in welchem das Gas mit einem gegenüber Normaldruck (Umgebungsluftdruck; Atmosphärendruck) deutlich erhöhten Druck zurück zum Kompressor geführt wird. Üblicherweise werden pneumatische Systeme zum Betrieb von Druckgasmotoren unter Verzicht auf eine leitungsgebundene Gasrückführung betrieben. Dabei wird als Arbeitsgas Luft verwendet, welche nach der Expansion im Druckluftmotor einfach in die Umgebungsatmosphäre entlassen wird. Die Ersparnis einer leitungsgebundenen Gasrückführung zum Kompressor wird gemeinhin als Vorteil pneumatischer Systeme gegenüber hydraulischen Systemen betrachtet, da die Systeme so technisch einfacher zu realisieren sind. Doch erst die Verwendung einer solchen Rückführdruckgasleitung vom Druckgasmotor zurück zum Kompressor erlaubt es, die Kompression von einem signifikant erhöhten Druckniveau ausgehend zu betreiben. In einer bevorzugten Ausgestaltung wird beispielsweise ein Druck von mindestens 10 bar in der Rückführdruckgasleitung genutzt.

Die Zuführung des nur auf den genannten erhöhten Druck von > 5 bar anstatt auf Normaldruck entspannten Gases zum Kompressor führt zu einer entscheidend herabgesetzten Kompressibilität $\kappa=1/V^*dV/dp$ des zu komprimierenden Gases.

Im Rahmen der Anmeldung wird den üblichen Benennungen folgend mit V ein Volumen des betrachten Gases bezeichnet, mit p ein Druck und mit T eine Temperatur. dV, dp bzw. dT bezeichnen eine Volumen-, Druck- bzw. Temperaturänderung. Bei Zustandsänderungen werden diese Größen um Indizes "1" bzw. "2" ergänzt, um die Größen vor bzw. nach der Zustandsänderung anzugeben.

Bei isothermen Prozessen gilt für die Kompressibilität eines idealen Gases $\kappa=1/p$, für adiabatische Prozesse ergibt sich sogar $\kappa=1/\gamma p$, wobei $\gamma$ der Adiabatenexponent ist und beispielsweise für ein zweiatomiges Gas im zu betrachtenden Temperaturbereich 7/5 beträgt. Tatsächlich können die im erfindungsgemäßen Verfahren auftretenden Prozesse in hinreichender Näherung als adiabatisch betrachtet werden und das Arbeitsgas in hinreichender Näherung als ideales Gas im physikalischen Sinne. Damit nähert man sich mit steigendem Druckniveau im System hinsichtlich der Kompressibilität hydraulischen Systemen an, vermeidet aber die höhere Viskosität hydraulischer Fluide, die eine hohe innere Reibung und damit entsprechende energetische Verluste verursacht. Die verbliebene Kompressibilität des Druckgases kann dabei dem System erwünschte strukturschonende Dämpfungseigenschaften verleihen.

Die herabgesetzte Kompressibilität der Arbeitsgases führt zu geringeren Volumenströmen auf der Eingangsseite des Kompressors und zu geringeren Temperaturanstiegen bei der adiabatischen Kompression. Dies folgt auch aus den hier relevanten physikalischen Gleichungen. Das im erfindungsgemäßen Verfahren eingesetzte Arbeitsgas kann in hinreichender Näherung als ideales Gas im physikalischen Sinne betrachtet werden, womit in hinreichender Näherung die Proportionalität aus der Zustandsgleichung eines idealen Gases im physikalischen Sinn gilt:

$$p^*V \sim T \qquad (Gl. 1)$$

Die bei diesem Verfahren auftretenden Prozesse können in hinreichender Näherung als adiabatisch beschrieben werden, somit können hier die sogenannten Adiabatengleichungen oder Poissongleichungen zugrunde gelegt werden. Diese lauten:

$$p1/p2=(V1/V2)^{\wedge}(-\gamma) \qquad (Gl. 2)$$

$$p1/p2=(T1/T2)^{\wedge}(\gamma/\gamma-1) \qquad (Gl. 3)$$

$$V1/V2=(T1/T2)^{\wedge}(-1/(\gamma-1)), \qquad (Gl. 4)$$

wobei p1, V1 und T1 die Größen von Druck, Volumen und Temperatur vor der Zustandsänderung sind und p2, V2 und T2 jene nach der Zustandsänderung.

Angewendet auf das erfindungsgemäße Verfahren sind die Zustandsänderungen die Verdichtung des Gases im Kompressor und seine Entspannung im Druckgasmotor. Für den sogenannte Adiabatenexponenten steht $\gamma$. Er beträgt bei einem zweiatomigen Gas in dem bei diesem Verfahren auftretenden Temperaturbereich 7/5.

Die hohen Nennleistungen aktueller und zukünftiger Windenergieanlagen erfordern entsprechend hohe Übertragungsleistungen eines eingesetzten Energieübertragungssystems. Für das erfindungsgemäße Verfahren gilt in erster Näherung für diese Leistung P:

$$P=dV2/dt*(p2-p1) \qquad (Gl.\ 5)$$

wobei dV2/dt den Volumenstrom des Arbeitsgases in der Druckgasleitung angibt. Um die hohen Leistungen erreichen zu können, ist daher eine möglichst hohe Druckdifferenz p2-p1 erforderlich, da andernfalls die Volumenströme zu groß werden. Außerdem ist der Temperaturanstieg bei der adiabatischen Kompression auf technisch praktikable Werte zu begrenzen.

Aus den Gleichungen (Gl. 2) und (Gl. 3) folgt, dass die Größen V2 und T2 nach der Kompression bei vorgegebenem V1 und T1 allein vom Kompressionsverhältnis p1/p2 abhängen. Bei gleichem Kompressionsverhältnis p1/p2, aber um einen Faktor k erhöhtem Eingangsdruck p1 steigt auch die Druckdifferenz p2-p1 um diesen Faktor k, während V1, V2 und T1, T2 unverändert bleiben. Bei vorgegebenem Wert für das Kompressionsverhältnis wird über den Wert für den Eingangsdruck p1 des Druckgases bei Eintritt in den Kompressor die Druckdifferenz p2-p1 und damit bei konstantem Volumenstrom dV2/dt die übertragene Leistung gesteuert .

Das erfindungsgemäße Verfahren verzichtet damit bei der Expansion im Motor auf die denkbar größte Entspannung des Gases auf niedrige Werte für p1 zu Gunsten der Vorteile bei der anschließenden Kompression in Form eines geringeren Temperaturanstiegs sowie eines geringerer Volumenstroms auf der Eingangsseite des Kompressors, d.h. in der Rückführdruckgasleitung.

Die Führung des Arbeitsgases in einem geschlossenen Kreislauf mittels einer Rückführdruckgasleitung beinhaltet zwei weitere essentielle Vorteile gegenüber einem klassischen pneumatischen System: Zum einen entfällt eine permanente Aufbereitung des Arbeitsgases (Trocknung und Filterung) und zum anderen kann auch ein anderes Arbeitsgas als Luft verwendet werden, z.B. Stickstoff.

Die pneumatische Energieübertragung bietet darüber hinaus weitere Vorteile, nämlich eine mechanische Entkopplung von Rotor und Generator bzw. Generatorgetriebeeinheit, und die Möglichkeit einer Drehzahlübersetzung durch das pneumatische System und damit den Entfall einer ggf. eingesetzten mechanischen Getriebestufe. Diese Drehzahlübersetzung kann zudem auch variabel gesteuert werden. Schließlich sind der Generator und nachgelagerten Anlagenkomponenten bei Wartungs- und Instandsetzungsarbeiten durch die bodennahe Platzierung besser erreichbar.

In einer weiteren vorteilhaften Ausgestaltung der Windenergieanlage weist die Rückführdruckgasleitung eine Querschnittsgröße auf, die über einer Querschnittsgröße der Druckgasleitung liegt. Aufgrund des geringeren Drucks in der Rückführdruckgasleitung gegenüber der Druckgasleitung wäre bei gleichem Querschnitt in dem geschlossenen Kreislauf das Arbeitsgas in der Rückführdruckgasleitung mit einer höheren Strömungsgeschwindigkeit zu transportieren. Der größere Querschnitt verringert Energieverluste, die sich andernfalls durch die höhere Strömungsgeschwindigkeit bei dem Gastransport ergeben könnten.

In einer weiteren vorteilhaften Ausgestaltung sind mindestens zwei Druckgastanks vorgesehen, von denen mindestens einer mit der Druckgasleitung verbunden ist und mindestens ein weiterer mit der Rückführdruckgasleitung. Dadurch kann die Windenergieanlage zusätzliche Regelenergie für ein Netzsystem (d.h. das Energieversorgungsnetz, mit dem der Generator gekoppelt ist) zur Verfügung stellen. Die Windenergieanlage kann Energie in Form von Druckgas speichern bzw. abgeben.

In einer weiteren vorteilhaften Ausgestaltung ist vorgesehen, die Energie aus mehreren Kompressoren an einen einzigen (zentralen) Generator zu übertragen. Auch die zuvor genannten Druckgasspeicher können zentral mit einem oder mehreren Kompressoren gekoppelt werden.

Die Erfindung wird nachfolgend anhand von Ausführungsbeispielen mithilfe von Figuren näher erläutert. Die Figuren zeigen:

Figur 1     eine schematische Schnittdarstellung eines Windrads mit Horizontalachse; und

Figur 2     ein schematisches Flussdiagramm zur Veranschaulichung eines erfindungsgemäßen Verfahrens.

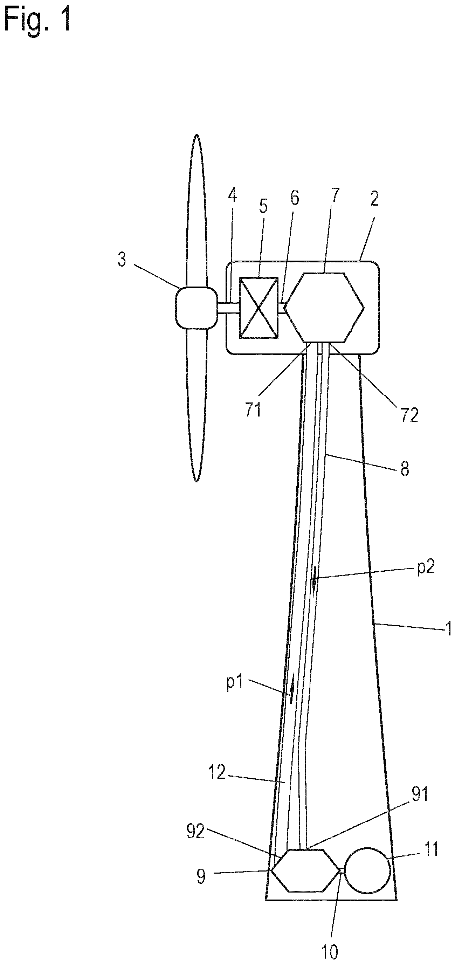

Figur 1 zeigt ein Windrad mit Horizontalachse als Beispiel einer anmeldungsgemäßen Windenergieanlage in einer schematischen Schnittdarstellung.

Das Windrad weist einen Turm 1 auf, an dessen Spitze eine Gondel 2 drehbar um eine Vertikalachse montiert ist. Die Gondel 2 trägt einen Rotor 3 mit einem oder mehreren, in der Regel drei Rotorblättern. Der Rotor 3 ist an einer drehbar gelagerten, horizontal ausgerichteten Rotorwelle 4 montiert, die beim dargestellten Beispiel zu einem in der Gondel 2 angeordneten Getriebe 5 führt. Eine Drehbewegung der Rotorwelle 4 wird durch das Getriebe 5 auf eine abtriebsseitige Getriebewelle 6 übertragen, die wiederum mit einem Kompressor 7 gekoppelt ist. Das in diesem Ausführungsbeispiel gezeigte Getriebe 5 ist optional. Es sind Ausgestaltungen möglich, bei denen die Rotorwelle 4 unmittelbar mit dem Kompressor 7 gekoppelt ist, wodurch vorteilhaft die Anlage einen einfacheren und wartungsärmeren Aufbau erhält.

Aus Gründen der einfacheren Darstellung sind bekannte und in der Regel bei Windrädern vorhandene Einrichtungen, beispielsweise zur Drehung der Gondel 2 auf dem Turm 1 oder zur Verstellung von Anstellwinkeln der Rotorblätter des Rotors 3, in der schematischen Zeichnung der Figur 1 nicht dargestellt. Auch Steuereinrichtungen, die ein Nachführen der Gondel 2 zur Ausrichtung des Rotors 3 in Windrichtung und/oder einer Einstellung der Anstellwinkel der Rotorblätter dienen, sind hier nicht wiedergegeben.

Der Kompressor 7 ist ein Gasdruckkompressor, der an einem Gaseinlass 71 unter einem ersten Druck $p1$ zugeführtes Arbeitsgas komprimiert und an einem Gasauslass 72 abgibt. Der Kompressor 7 kann ein- oder mehrstufig arbeiten und beispielsweise als Schrauben- oder Kolbenkompressor ausgebildet sein. Da sich Gas beim Komprimieren erwärmt, steigt auch eine Temperatur des Kompressors 7 über die Umgebungstemperatur an. Um thermische Verluste zu minimieren, kann in einer bevorzugten Ausgestaltung der Kompressor 7 thermisch gegenüber seiner Umgebung isoliert sein.

Das dem Kompressor 7 zugeführte Gas wird auf einen gegenüber dem ersten Druck $p1$ höheren zweiten Druck $p2$ komprimiert und über eine Druckgasleitung 8 zu einem im Fuß des Turms 1 positionierten Druckgasmotor 9 geführt. Der Druckgasmotor 9 weist dazu einen Gaseinlass 91 auf. Die Druckgasleitung 8 verbindet somit den Gasauslass 72 des Kompressors 7 mit dem Gaseinlass 91 des Druckgasmotors 9. Aufgrund der über der Umgebungstemperatur liegenden Temperatur des Gases in der Druckgasleitung 8 ist diese ebenfalls bevorzugt thermisch isoliert.

Der Druckgasmotor 9 ist im dargestellten Beispiel innerhalb eines Fußes des Turms 1 angeordnet. In alternativen Ausgestaltungen kann der Druckgasmotor 9 auch in einem benachbarten oder auch entfernter liegenden separaten Gebäude angeordnet sein.

Der Druckgasmotor 9 weist eine Abtriebswelle auf, die mit einer Generatorwelle 10 eines Generators 11 gekoppelt ist. Entsprechend der bodennahen Anordnung des Druckgasmotors ist auch der Generator 11 somit bodennah angeordnet. Eine Positionierung des in der Regel voluminösen und auch schweren Generators 11 innerhalb der Gondel 9 wird durch die Übertragung der Energie des Rotors 3 über die Anordnung bestehend aus dem Kompressor 7, der Druckgasleitung 8 und dem Druckgasmotor 9 vermieden.

Ebenso wie der Kompressor 7 und die Druckgasleitung 8 kann auch der Druckgasmotor 9 in einer vorteilhaften Ausgestaltung thermisch isoliert sein.

Anmeldungsgemäß wird das sich innerhalb des Druckgasmotors 9 unter Energieabgabe entspannende Gas nicht in die Umgebung abgegeben, sondern über eine Rückführdruckgasleitung 12 wieder zum Kompressor 7 geführt. Die Rückführdruckgasleitung 12 verbindet somit einen Gasauslass 92 des Druckgasmotors 9 mit dem Gaseinlass 71 des Kompressors 7. Die Rückführdruckgasleitung 12 weist dabei bevorzugt einen größeren Durchmesser bzw. eine größere Querschnittsfläche auf als die Druckgasleitung 8.

Im Resultat wird ein in sich geschlossener Gaskreislauf gebildet, durch den es möglich ist, dem Kompressor 7 an seinem Gaseinlass 71 Arbeitsgas zur Verfügung zu stellen, dessen Druck über dem Umgebungsluftdruck liegt. Um das mit Druck beaufschlagte Arbeitsgas zurückzuführen, ist die Rückführdruckgasleitung 12 entsprechend druckstabil ausgeführt. Die Rückführung bei einem Druck, der über dem Umgebungsluftdruck liegt, führt zu einer herabgesetzten Kompressibilität des vom Kompressor 7 zu komprimierenden Gases. Eine herabgesetzte Kompressibilität wiederum führt zu geringeren Volumenströmen bei gleicher übertragener Energie und zu geringeren Temperaturanstiegen bei der adiabatischen Kompression. Die niedrigeren Temperaturen des komprimierten Gases sind technisch einfacher zu handhaben und zudem mit geringeren thermischen Verlusten verbunden. Es werden so hinsichtlich der Kompressibilität trotz Einsatz eines Gases die Vorteile hydraulischer Systeme erzielt, wobei aber die bei hydraulischen Flüssigkeiten höhere Viskosität, die eine hohe innere Reibung und entsprechende Verluste zur Folge hat, vermieden wird.

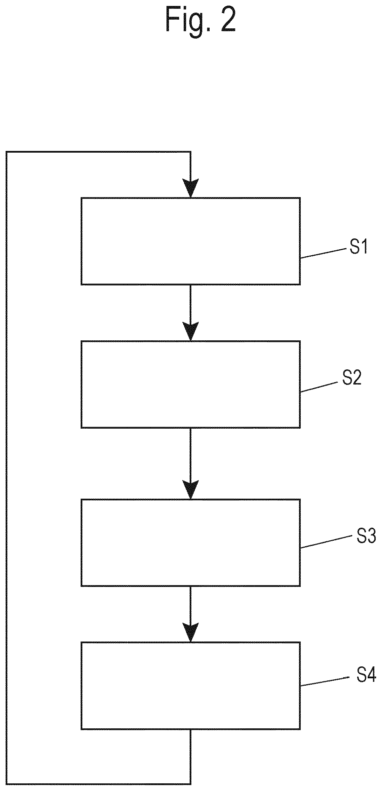

Figur 2 verdeutlicht ein Ausführungsbeispiel eines anmeldungsgemäßen Verfahrens nochmals in Form eines Flussdiagramms. Das Verfahren kann beispielsweise von der in Figur 1 dargestellten Windenergieanlage ausgeführt werden und wird nachfolgend mit Bezug auf die Windenergieanlage gemäß Figur 1 beschrieben.

In einem ersten Schritt S1 wird ein als Arbeitsgas eingesetztes Gas, beispielsweise Luft oder auch Stickstoff, in einen Kompressor 7 von einem ersten Druck $p1$ auf einen zweiten Druck $p2$ gebracht, wobei der Kompressor 7 direkt oder alternativ auch indirekt über ein Getriebe 5 von einem Rotor 3 einer Windenergieanlage angetrieben wird.

In einem zweiten Schritt S2 wird das Gas zu einem sich bevorzugt bodennah, beispielsweise innerhalb der Windenergieanlage, befindenden Druckgasmotor 9 über eine Druckgasleitung 8 transportiert.

Im anschließenden Schritt S3 entspannt sich das Gas im Druckgasmotor 9 unter Abgabe von Energie, die über eine sich drehende Generatorwelle 10 einem Generator 11 zugeführt wird. Bei der Entspannung des Gases sinkt der Druck vom zweiten Druck $p2$ auf den ersten Druck $p1$ ab, wobei das Volumen des Gases zunimmt und die Temperatur des Gases abnimmt.

In einem folgenden Schritt S4 wird das entspannte Gas über eine Rückführdruckgasleitung 12 wieder dem Kompressor 7 zugeführt, so dass ein in sich geschlossener Gaskreislauf entsteht. Dabei liegt der Druck $p1$, mit dem das Gas wieder zum Kompressor geführt wird, signifikant über dem Umgebungsluftdruck, indem das Arbeitsgas in der Rückführdruckgasleitung 12 einen Druck $p1 > 5$ bar aufweist.

Der Prozess ist als ein Kreisprozess ausgeführt, so dass sich an den Schritt S4 wieder der Schritt S1 anschließt.

Bei einer Erstinbetriebnahme kann ein Aufbau des Drucks im geschlossenen Gaskreislauf z.B. durch zusätzliche Hilfskompressoren erfolgen. Es kann auch vorgesehen sein, den Kompressor 7 zum Druckaufbau zu verwenden, indem temporär eine Gasquelle an den Gaseinlass 71 des Kompressors 7 gekoppelt wird und das eigentlich dort angeschlossene Ende der Rückführdruckgasleitung 12 temporär verschlossen wird.

Weiter kann vorgesehen sein, bei einem Wiederanfahren der Windenergieanlage nach einem Stillstand durch einen gesonderten Betriebsprozess zunächst Sollparameter, insbesondere für die Drücke p1 und p2 im Gaskreislauf herzustellen, ehe die Windenergieanlage in den Regelbetrieb übergehen kann. Je nach Ausführungsvariante des erfindungsgemäßen Verfahrens ist das durch eine geeignete Anlagensteuerung zu gewährleisten.

In einer Weiterbildung sowohl der in Figur 1 gezeigten Anlage, als auch des in Figur 2 beschriebenen Verfahrens kann vorgesehen sein, dass mehrere Windenergieanlagen jeweils mit einem eigenen Kompressor gemeinsam einen zentral angeordneten Generator antreiben. Der Generator könnte beispielsweise in einem separaten Gebäude zwischen zwei Windrädern als Windenergieanlage angeordnet sein. Auf diese Weise kann ein Generator für zwei Windräder genutzt werden. Dabei kann der eine zentrale Generator mechanisch mit mehreren Druckgasmotoren, die jeweils einem Windrad zugeordnet sind, gekoppelt sein. Alternativ ist es auch möglich, einen zentralen Druckgasmotor mit mehreren Gasdruckkreisen einzusetzen. Auch ist es denkbar, dass die Gaskreisläufe der Windräder gekoppelt sind, um nur ein Druckgasmotor mit nur einem Gasdruckkreis gemeinsam zu nutzen, der den zentralen Generator antreibt. Durch die gemeinsame Nutzung von Komponenten können der Systempreis und Materialaufwand eines Windparks als Ganzes vorteilhaft verringert werden.

**Bezugszeichenliste**

1    Turm
2    Gondel
3    Rotor
4    Rotorwelle
5    Getriebe
6    Getriebewelle
7    Kompressor

71    Gaseinlass (des Kompressors)
72    Gasauslass (des Kompressors)

8    Druckgasleitung
9    Druckgasmotor

91    Gaseinlass (des Druckgasmotors)
92    Gasauslass (des Druckgasmotors)

10    Generatorwelle
11    Generator
12    Rückführdruckgasleitung

p1    erster Druck
p2    zweiter Druck

**Patentansprüche**

1.    Windenergieanlage mit einem Rotor (3) und einem bodennah angeordneten Generator (11), wobei ein Kompressor (7) mechanisch mit dem Rotor (3) gekoppelt ist und ein Druckgasmotor (9) mechanisch mit dem Generator (11) gekoppelt ist, wobei ein Gasauslass (72) des Kompressors (7) und ein Gaseinlass (91) des Druckgasmotors (9) über eine Druckgasleitung (8) miteinander verbunden sind, wobei

die Windenergieanlage zudem eine Rückführdruckgasleitung (12) aufweist, über die ein Gaseinlass (71) des Kompressors (7) mit einem Gasauslass (92) des Druckgasmotors (9) verbunden ist, und wobei die Windenergieanlage dazu eingerichtet ist, dass das Arbeitsgas im Betrieb in der Rückführdruckgasleitung (12) einen Druck von mindestens 5 bar aufweist, **dadurch gekennzeichnet, dass**

die Windenergieanlage weiter dazu eingerichtet ist, eine übertragene Leistung bei einem vorgegebenem Wert für ein Kompressionsverhältnis des Arbeitsgases im Kompressor (7) über einen Wert für einen Eingangsdruck des Arbeitsgases bei einem Eintritt in den Kompressor (7) zu steuern.

2.    Windenergieanlage nach Anspruch 1, aufweisend einen Turm (1) mit einer an der Turmspitze angeordneten Gondel (2), an der der Rotor (3) an einer horizontal ausgerichteten Rotorwelle (4) montiert ist.

3.    Windenergieanlage nach Anspruch 2, bei der der Kompressor (7) in der Gondel (2) angeordnet ist.

4.    Windenergieanlage nach Anspruch 2 oder 3, bei der der Druckgasmotor (9) und/oder der Generator (11) in einem Fuß des Turms (1) angeordnet sind.

5.    Windenergieanlage nach einem der Ansprüche 1 bis 4, bei der der Kompressor (7), die Druckgasleitung (8), die Rückführdruckgasleitung (12) und/oder der Druckgasmotor (9) thermisch gegenüber der Umgebung isoliert sind.

6.    Windenergieanlage nach einem der Ansprüche 1 bis 5, bei der die Rückführdruckgasleitung (12) eine Querschnittsgröße aufweist, die über einer Querschnittsgröße der Druckgasleitung (8) liegt.

7. Windenergieanlage nach einem der Ansprüche 1 bis 6, aufweisend mindestens zwei Druckgastank, von denen mindestens einer pneumatisch mit der Druckgasleitung (8) gekoppelt ist und mindestens ein weiterer pneumatisch mit der Rückführdruckgasleitung (12) gekoppelt ist.

8. Windenergieanlage nach einem der Ansprüche 1 bis 7, aufweisend mindestens zwei Kompressoren (7), die jeweils mit einem Rotor (3) gekoppelt sind, und die über jeweils eine Druckgasleitung (8) und eine Rückführdruckgasleitung (12) mit jeweils einem Druckgasmotor (9) verbunden sind, wobei die Druckgasmotoren (9) mechanisch mit dem Generator (9) verbunden sind, um ihn gemeinsam zu nutzen.

9. Windenergieanlage nach einem der Ansprüche 1 bis 7, aufweisend mindestens zwei Kompressoren (7), die jeweils mit einem Rotor (3) gekoppelt sind, und die über jeweils eine Druckgasleitung (8) und eine Rückführdruckgasleitung (12) mit einem gemeinsamen genutzten Druckgasmotor (9) gekoppelt sind.

10. Verfahren zur Übertragung von mechanischer Energie in einer Windenergieanlage von einem Rotor (3) auf einen bodennah angeordneten Generator (11) mittels eines mechanisch mit dem Rotor (3) gekoppelten Kompressors (7), einer Druckgasleitung (8) und einem mechanisch mit dem Generator (11) gekoppelten Druckgasmotor (9), wobei

   - Arbeitsgas im Kompressor (7) unter Energieaufnahme von einem ersten Druck (p1), der mindestens 5 bar beträgt, auf einen zweiten Druck (p2) komprimiert wird;
   - das komprimierte Arbeitsgas über die Druckgasleitung (8) zum Druckgasmotor (9) geführt wird;
   - das Arbeitsgas unter Energieabgabe im Druckgasmotor (9) auf den ersten Druck (p1) entspannt wird;
   - das entspannte Arbeitsgas über eine Rückführdruckgasleitung (12) zum Kompressor (7) zurückgeführt wird, um wieder komprimiert zu werden; wobei
   - ein Kompressionsverhältnis zwischen dem ersten Druck (p1) und dem zweiten Druck (p2) vorgegeben ist; und
   - eine übertragene Leistung über einen Wert für den ersten Druck (p1) gesteuert wird.

11. Verfahren nach Anspruch 10, bei dem der erste Druck (p1) größer als 10 bar ist.

**Claims**

1. Wind turbine having a rotor (3) and a generator (11) arranged close to the ground, wherein a compressor (7) is mechanically coupled to the rotor (3) and a compressed gas engine (9) is mechanically coupled to the generator (11), wherein a gas outlet (72) of the compressor (7) and a gas inlet (91) of the compressed gas engine (9) are connected to each other via a compressed gas line (8), wherein

   the wind turbine further comprises a return pressure gas line (12) via which a gas inlet (71) of the compressor (7) is connected to a gas outlet (92) of the pressurized gas engine (9), and wherein the wind turbine is arranged such that in operation the working gas has a pressure of at least 5 bar in the return pressure gas line (12), **characterized in that**
   the wind turbine is further arranged to control a transmitted power at a predetermined value for a compression ratio of the working gas in the compressor (7) via a value for an inlet pressure of the working gas upon entering the compressor (7).

2. Wind turbine according to claim 1, comprising a tower (1) with a nacelle (2) arranged at the top of the tower, on which the rotor (3) is mounted on a horizontally aligned rotor shaft (4).

3. Wind turbine according to claim 2, wherein the compressor (7) is arranged in the nacelle (2).

4. Wind turbine according to claim 2 or 3, wherein the compressed gas engine (9) and/or the generator (11) are arranged in a base of the tower (1).

5. Wind turbine according to any one of claims 1 to 4, wherein the compressor (7), the pressurized gas line (8), the return pressurized gas line (12) and/or the pressurized gas engine (9) are thermally insulated from the environment.

6. Wind turbine of any one of claims 1 to 5, wherein the return pressurized gas line (12) has a cross-sectional size that is larger than a cross-sectional size of the pressurized gas line (8).

7. Wind turbine according to any one of claims 1 to 6, comprising at least two pressurized gas tanks, at least one of which is pneumatically coupled to the pressurized gas line (8) and at least one other of which is pneumatically coupled to the return pressurized gas line (12).

8. Wind turbine according to any one of claims 1 to 7, comprising at least two compressors (7), each coupled to a rotor (3), and each connected to a compressed gas engine (9) via a compressed gas line (8) and a return compressed gas line (12), wherein the compressed gas engines (9) are mechanically connected to the generator (9) for common use.

9. Wind turbine according to any one of claims 1 to 7, comprising at least two compressors (7), each coupled to a rotor (3), and each coupled via a compressed gas line (8) and a return compressed gas line (12) to a commonly used compressed gas engine (9).

10. Method for transmitting mechanical energy in a wind turbine from a rotor (3) to a generator (11) arranged close to the ground by means of a compressor (7) mechanically coupled to the rotor (3), a compressed gas line (8) and a compressed gas engine (9) mechanically coupled to the generator (11), wherein

- working gas is compressed in the compressor (7) from a first pressure (p1), which is at least 5 bar, to a second pressure (p2) while absorbing energy;
- the compressed working gas is fed to the compressed gas engine (9) via the compressed gas line (8);
- the working gas is expanded to the first pressure (p1) in the pressurized gas engine (9) while releasing energy;
- the expanded working gas is returned to the compressor (7) via a return pressure gas line (12) to be recompressed; wherein
- a compression ratio between the first pressure (p1) and the second pressure (p2) is predetermined; and
- a transmitted power is controlled via a value of the first pressure (p1).

11. The method according to claim 10, wherein the first pressure (p1) is larger than 10 bar.

## Revendications

1. Installation de génération éolienne munie d'un rotor (3) et d'un générateur (11) disposé près du sol, dans laquelle un compresseur (7) est couplé mécaniquement avec le rotor (3) et un moteur à gaz comprimé (9) est couplé mécaniquement avec le générateur (11), dans laquelle une sortie de gaz (72) du compresseur (7) et une entrée de gaz (91) du moteur à gaz comprimé (9) sont reliées l'une à l'autre par une conduite de gaz comprimé (8),

l'installation de génération éolienne comportant en outre une conduite de retour du gaz comprimé (12) par laquelle une entrée de gaz (71) du compresseur (7) communique avec une sortie de gaz (92) du moteur à gaz comprimé (9), et l'installation de génération éolienne étant agencée de telle manière que le gaz de travail présente, en fonctionnement, une pression d'au moins 5 bars dans la conduite de retour du gaz comprimé (12),

**caractérisée en ce qu'**elle est en outre agencée de façon à réguler une puissance transmise à une valeur prédéterminée pour un rapport de compression du gaz de travail dans le compresseur (7) à l'aide d'une valeur de pression d'entrée du gaz de travail à l'entrée du compresseur (7).

2. Installation de génération éolienne selon la revendication 1, présentant un pylône (1) avec une nacelle (2) disposée au sommet du pylône, sur laquelle le rotor (3) est monté sur un arbre de rotor (4) disposé horizontalement.

3. Installation de génération éolienne selon la revendication 2, dans laquelle le compresseur (7) est disposé dans la nacelle (2).

4. Installation de génération éolienne selon la revendication 2 ou 3, dans laquelle le moteur à gaz comprimé (9) et/ou le générateur (11) sont disposés dans un pied du pylône (1).

5. Installation de génération éolienne selon l'une des revendications 1 à 4, dans laquelle le compresseur (7), la conduite de gaz comprimé (8), la conduite de retour du gaz comprimé (12) et/ou le moteur à gaz comprimé (9) sont isolés du point de vue thermique de l'environnement.

6. Installation de génération éolienne selon l'une des revendications 1 à 5, dans lequel la conduite de retour du gaz comprimé (12) a une taille en section qui dépasse la taille en section de la conduite de gaz comprimé (8).

7. Installation de génération éolienne selon l'une des revendications 1 à 6, présentant au moins deux réservoirs de gaz comprimé, dont au moins un est couplé pneumatiquement avec la conduite de gaz comprimé (8) et au moins un autre est couplé pneumatiquement avec la conduite de retour du gaz comprimé (12).

8. Installation de génération éolienne selon l'une des revendications 1 à 7, comprenant au moins deux compresseurs (7) qui sont couplés chacun à un rotor (3) et qui sont reliés chacun par une conduite de gaz comprimé (8) et une conduite de retour du gaz comprimé (12) à un moteur à gaz comprimé (9), les moteurs à gaz comprimé (9) étant reliés mécaniquement au générateur (9) pour utiliser celui-ci ensemble.

9.  Installation de génération éolienne selon l'une des revendications 1 à 7, comprenant au moins deux compresseurs (7) qui sont couplés chacun à un rotor (3) et qui sont couplés chacun par une conduite de gaz comprimé (8) et une conduite de retour du gaz comprimé (12) avec un moteur à gaz comprimé (9) qu'ils utilisent ensemble.

10. Procédé pour la transmission d'énergie mécanique dans une installation de génération éolienne, d'un rotor (3) à un générateur (11) disposé près du sol, au moyen d'un compresseur (7) couplé mécaniquement au rotor (3), d'une conduite de gaz comprimé (8) et d'un moteur à gaz comprimé (9) couplé mécaniquement au générateur (11), dans lequel

    - du gaz de travail est comprimé dans le compresseur (7) en absorbant de l'énergie, d'une première pression (p1) d'au moins 5 bars à une deuxième pression (p2) ;
    - le gaz de travail comprimé est amené via la conduite de gaz comprimé (8) au moteur à gaz comprimé (9) ;
    - le gaz de travail est détendu à la première pression (p1) dans le moteur à gaz comprimé (9) en libérant de l'énergie ;
    - le gaz de travail détendu est ramené au compresseur (7) via une conduite de retour du gaz comprimé (12) pour être à nouveau comprimé,
    - un rapport de compression entre la première pression (p1) et la deuxième pression (p2) étant prédéfini et
    - une puissance transmise étant régulée à l'aide d'une valeur de la première pression (p1).

11. Procédé selon la revendication 10, dans lequel la première pression (p1) est supérieure à 10 bars.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011106145 B3
- DE 3025563 A1
- DE 102007061517 A1
- US 20120045328 A1
- US 2112633 A

- DE 10334637 A1
- DE 202018102987 U1
- EP 1607625 A2
- EP 3011203 B1